# EUROPEAN PATENT APPLICATION

(11) **EP 0 745 419 A2**
(43) Date of publication of application: **04.12.1996**
(21) Application number: 96303934.2
(22) Date of filing: 31.05.1996
(51) Int. Cl.: B01D 53/04, B01D 53/86

(54) **Method and systems for fluid purification using a catalyst and a sorbent**

(30) Priority: 31.05.1995 US 457434
(71) Applicant: Pall Corporation, East Hills, New York 11548 (US)
(72) Inventor: White, Donald, Jr., Homer, New York 13077 (US); Cassidy, Ronald Frederick, Waterlooville, Hampshire PO7 7NH (GB); Gingrich, Dana, Homer, New York 13077 (US)
(74) Representative: Knott, Stephen Gilbert

(57) **Abstract**

A fluid purification system is provided which includes a catalyst bed for chemically converting at least one contaminant present in a fluid to a substance selectively removable by a sorbent, and, in fluid communication with the catalyst bed, a sorption device including a regenerable sorbent capable of removing the substance. A method of purifying a fluid stream is also provided which includes introducing a fluid stream to a catalyst bed, chemically converting at least one contaminant present in the fluid to a substance which is selectively removable by a sorbent and introducing the fluid stream to a sorption device containing a regenerable sorbent, the sorbent device disposed in fluid communication with the catalyst bed.

## Description

### Technical Field

The present invention relates to a system for removing contaminants from a fluid as well as to a method for removing contaminants from a fluid. More particularly, the present invention relates to a method and to a system for converting at least one contaminant to a substance which is capable of being sorbed by a sorbent and removing the substance with a regenerable sorbent.

### Background of the Invention

Research and development efforts in the twentieth century have resulted in separation and purification methods and devices which have lead to significant improvements not only in specialized areas of technology but also in the environment of the home and work place. For example, numerous processes, devices and materials have resulted in removal of both particulate and soluble contaminants, including biological and chemical contaminants, from the air and water sources supplied to the home and work place. Technology has also allowed not only control of temperature and humidity in such environments but also the removal of airborne contaminants in confined areas. The greatest challenges to providing pure fluids essential to life, such as air and water, have occurred in confined spaces in which movement in or out of the confined space is severely restricted. Thus, the cabins of modern aircraft are substantially sealed and isolated from the atmosphere. This makes the cabin of an aircraft unique in at least one respect from other passenger carrying compartments or even confined areas generally. Thus, most aircraft cabins, particularly those of large commercial aircraft, are isolated from the environment at large, and the passengers occupying the cabin are not only not permitted ingress or egress after embarkation but also have only limited fluid communication with the environment outside of the aircraft during the duration of the flight. Accordingly, the air purification systems employed in modern aircraft are intended to remove odorous, toxic and particulare contaminants from air being recycled within the enclosed and isolated area of the passenger compartment or cabin of the aircraft. In most commercial aircraft, compressed air is extracted from an engine compressor stage as makeup air and is supplied to the cabin while some of the cabin air is vented to the external atmosphere. "Fresh" air is even more restricted in the confined space of a submarine when the craft is submerged. In such a situation, the volume of air in the craft is finite and removal of contaminants without significant loss of oxygen is even more critical.

Considering the "captive" or confining nature of these situations from the perspective of passengers and crew who are unable to significantly alter their environment during the duration of the journey, increasing concern has been focused on the air quality standards provided within these craft. This concern has focused most on situations where the journey is very long and/or the number of passengers and/or crew is large, such that the purification system may be stressed beyond its limits. Accordingly, it is highly desirable to provide an effective system for removing airborne contaminants, both of a particulate and gaseous nature. An adequate system used for the removal of airborne contaminants from an aircraft or water craft cabin should be capable of removing both particulate contaminants, such as microorganisms, particulates from tobacco smoke, and fibers from clothing, carpets and upholstery, as well as odorous and toxic gases and vapors, such as those present in tobacco smoke, respiration products, byproducts and degradation products of the materials used in the construction of the aircraft, cooking odors, refrigerants, fuels and lubricating fluids and their decomposition products, etc. A purification system which achieves these objects would also have the concomitant effect, in an aircraft, of requiring less air to be supplied from the engine compressor stage and thereby resulting in fuel savings and lower operating costs. When used in any type of passenger or crew cabin in an aircraft or water craft, potential health hazards could be minimized by using such a purification system and the length of the journey potentially could be increased.

The effectiveness sought in air purification systems of the type employed to purify the air in a confined area, and particularly of the type used in aircraft and submarines, relate most frequently to the types of material or media used in such systems as well as the devices employed to achieve purification. As to the characteristics sought in the material or media used, among these are high sorption capacity, high sorption rate, high durability, low pressure loss, low pressure differentials across the sorption material or medium, minimal loss of material from the sorption material or medium, low manufacturing costs, and in the case of aircraft, light weight or low density of the material or medium. Thus, materials and media are preferred which can be used in systems which filter large volumes of air and are capable of effective and efficient removal of contaminants. To reduce costs and the expenditure of labor, such materials should have an extended service life, be durable and permit easy replacement of the sorption material or medium or should be easily and quickly regenerated.

A suitable system for removing contaminants from a confined space should be capable of removing, particularly when employed in craft such as airplanes and submarines, carbon dioxide, organic vapors, carbon monoxide, hydrogen gas and refrigerant vapors, such as freons and particularly R12 and R134a. With regard to the latter, the system should be capable of removing such refrigerants without producing hazardous decomposition compounds which can result from partial oxidation of the refrigerants. Although fully halogenated compounds, such as R12, are extremely stable and are less toxic than R134a and its byproducts, R12 and other chlorofluorocarbons persist in the atmosphere for many years, eventually diffusing into the stratosphere. Such chlorofluorocarbons have been shown to react with ozone, resulting in a reduction in the ozone layer. The fluorocarbon R134a, while believed to be less reactive with ozone and, accordingly, having less of a long term environmental impact, has been shown to be more toxic than R12. In addition to the detrimental effects on human health of such refrigerants, particularly R134a, these and other similar refrigerants can produce additional toxic compounds through thermal degradation and partial oxidation, such as when exposed to heated surfaces. The degradation products include hydrogen fluoride and hydrogen chloride, both of which are toxic and corrosive. Fluorine and chlorine oxides are also formed during partial oxidation of refrigerant vapors and, like hydrogen fluoride and hydrogen chloride, are also corrosive.

In confined spaces, particularly of the type found in aircraft and submarines, effective usage of the confined space is particularly critical. Therefore, it is essential to apportion minimal volume to objects and apparatus which are not directly related to the operation of the craft. Accordingly, it is also desirable that any system employed for the removal of contaminants from fluids, particularly air, which is used in the craft occupy a very small volume.

### Summary of the Invention

An object of the present invention is to remove one or more contaminants from a fluid, such as air found in a confined space, without substantial loss of the more valuable components of the fluid, such as oxygen. These contaminants include, for example, carbon dioxide, carbon monoxide, hydrogen, volatile organic compounds, including hydrocarbons, refrigerants and decomposition products of refrigerants.

The present invention is directed to a fluid purification system, such as an air purification system, for removing one or more contaminants from such a fluid stream. The present invention is also directed to a method of removing one or more contaminants, both particulate and otherwise, from a fluid stream, such as air.

A fluid purification system according to the present invention includes a catalyst bed for chemically assisting in converting at least one contaminant present in a fluid to a substance selectively removable by a sorbent and a sorption device including a regenerable sorbent capable of removing at least the converted substance, disposed in fluid communication with the catalyst bed.

A method of removing contaminants from fluids according to the present invention involves introducing a fluid stream, such as a gaseous stream, and in particular an air stream, to a catalyst bed and, chemically converting at least one contaminant present in the fluid to a substance which is selectively removable by a sorbent. The fluid is then introduced to a sorption device which is disposed in fluid communication with the catalyst bed. The sorption device includes a regenerable sorbent capable of removing at least the converted substance.

The particular catalyst employed in the catalyst bed is determined, in part, by the particular contaminants sought to be converted to substances which may be selectively removed by a sorbent. Typically this is an oxidizing catalyst, that is, a catalyst which is capable of increasing the rate of an oxidation reaction of one or more of the contaminants being treated. In situations where hydrogen is present, an effective oxidation catalyst would be capable of oxidizing hydrogen gas to water vapor. Such as catalyst would also be capable of oxidizing carbon monoxide and volatile hydrocarbons to carbon dioxide.

The sorption device employed in the present invention preferably includes a thermal regeneration and cooling device. In another embodiment of the present invention, the sorption device includes not only a thermal regeneration and cooling device but also a pressure swing adsorber in fluid communication with an exhaust outlet of the thermal regeneration and cooling device. A further embodiment of the present invention includes as the sorption device a thermal regeneration and cooling device and a contaminant - enriched fluid recirculation loop in fluid communication with an exhaust outlet of the thermal regeneration and cooling device. As the sorption device in yet another embodiment of the present invention, two pressure swing adsorbers are operatively connected to one another.

A fluid purification system embodying the present invention may also be termed a contamination removal unit (CRU) especially when the various components are assembled as a single compacted unit. The CRUs of the present invention have several advantages over conventional purification systems used to remove contaminants from fluid. The purification system of this invention provides a compact unit which may be employed where there is minimal usable space, such as in aircraft and water craft. The present invention employs a regenerable sorption material in a device which automatically regenerates the sorption material during operation. This minimizes the time and costs devoted to replacing the sorption material as well as the necessity of storing additional sorption material in a confined and limited space. The selection of catalyst and operating conditions in the purification system and method of the present invention permit selective conversion of some contaminants while avoiding degradation of other contaminants, such as refrigerants, to more toxic and/or corrosive products. The present invention permits the removal of most gaseous contaminants commonly encountered in passenger and crew compartments of aircraft and water craft. In addition, the present invention consumes significantly lower energy than conventional systems used for similar purposes.

### Brief Description of the Drawings

Figure 1 is a perspective view of a first exemplary sorbing apparatus embodying the present invention shown with the front wall partially cut away.

Figure 2 is a schematic illustration of another exemplary sorbing device employed in an embodiment of the present invention.

Figure 3 is a schematic representation of an embodiment of the fluid purification system of the invention.

Figure 4 is a schematic illustration of another embodiment of a fluid purification system of the present invention.

Figure 5 is a schematic illustration of a further embodiment of the fluid purification system according to the present invention.

Figure 6 is a schematic illustration of a fluid purification system according to an embodiment of the invention.

Figure 7 is a schematic representation of another embodiment of the fluid purification system of the invention.

Figure 8 is a schematic illustration of an embodiment of the fluid purification system of the invention.

### Description of the Preferred Embodiments

The present invention is directed to a fluid purification system and to a method of purifying fluids, particularly gases, to remove contaminants therefrom. Each embodiment of the fluid purification system of the present invention includes a catalyst bed for chemically converting at least one contaminant which may be present in a contaminated fluid to a substance selectively removable by a sorbent. The system also includes a sorption device provided with a regenerable sorbent capable of removing at least the substance formed by conversion of the contaminant by the catalyst bed. The sorption device is disposed in fluid communication with the catalyst bed.

Various embodiments of the invention are described below with reference to the accompanying drawings. It should be noted, however, that the embodiments ilustrated in the drawings, and the descriptions related thereto, are exemplary only and are not to be construed as limiting in any way the scope of the invention to the embodiments described. Alternative embodiments and modifications which would still be encompassed by the invention may be made by those skilled in the art, particularly in light of the following description.

A preferred sorption device for use in the present invention is a thermal regeneration and cooling device. Various designs may be employed for such a device. A preferred thermal regeneration and cooling adsorbent device is described by White, Jr. in United States Patent No. 4,650,575, specifically incorporated herein by reference, and is available from Pall Corporation, Glen Cove, New York.

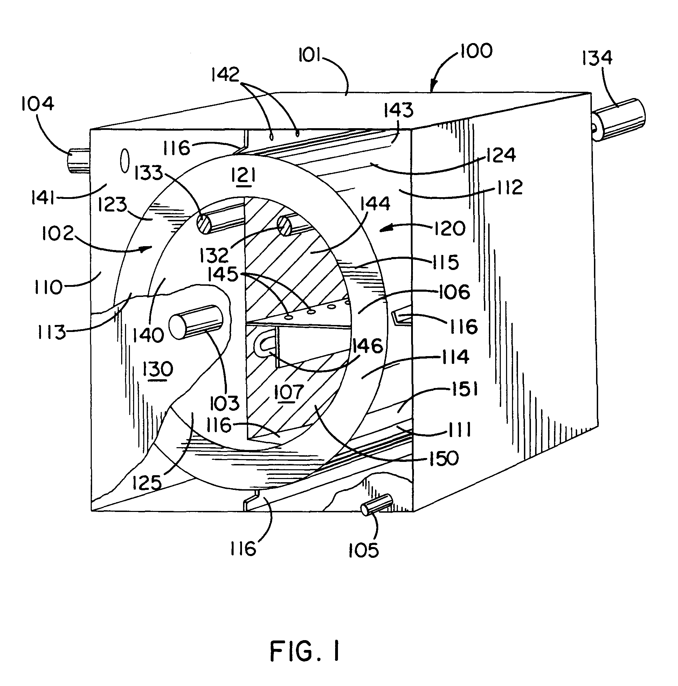

The preferred adsorbent thermal regeneration and cooling device is provided with a rotating adsorbent bed or drum and is illustrated in Figure 1. More particularly, the preferred apparatus includes a housing having an inlet, an outlet and an exhaust and defines a fluid flow path between them. Partitions are located within the housing and device the housing into a sorbing region, a regenerating region, and a cooling region. A hollow structure containing a sorbent material, i.e., a material which adsorbs one or more components from a fluid, is mounted for circulation within the housing in the fluid flow path and includes a sorbing sector, a regenerating sector, and a cooling sector defined by the sorbing region, regenerating region, and cooling region, respectively, of the housing. A mechanism, such as a motor which circulates the sorbent-containing structure through the sorbing, regenerating, and cooling regions, respectively, is also provided as is a heater which is disposed within the housing in the fluid flow path between the cooling sector and the regenerating sector of the sorbent-containing structure. A first assemblage directs the fluid from the inlet radially through the sorbing sector of the sorbent-containing structure, where one or more components are sorbed from the fluid, to the outlet. A second assemblage directs a portion of the fluid radially through the cooling sector of the sorbent-containing structure, thereby cooling that sector of the sorbent-containing structure, past the heater, thereby heating that portion of the fluid, radially through the regenerating sector of the sorbent-containing structure, thereby regenerating, and heating, that section of the sorbent-containing structure, and out the exhaust.

The preferred rotating adsorbent bed thermal regeneration and cooling device is illustrated generally by reference numeral 100 in Figure 1. The apparatus includes a housing 101 and a hollow, cylindrical sorbent arrangement 102. The housing 101 defines a fluid flow path between an inlet 103 for introducing a contaminated fluid to the housing, an outlet 104 for removing purified fluid from the housing and an exhaust outlet 105 for removing contaminant-enriched fluid from the housing. The sorbent arrangement 102 includes a sorbent material and is mounted for rotation within the housing 101 and the fluid flow path. In accordance with one aspect of the invention, as the sorbent arrangement 102 rotates within the housing 101, fluid is directed generally radially through the sorbent arrangement 102 and each segment arrangement 102 first sorbs at least one component from the fluid, then is regenerated by a heated portion of the fluid, and then is cooled by that portion of the fluid prior to heating. The housing 101 may be fabricated from any sufficiently rigid, impervious material and may be fashioned in any suitable configuration, depending on the parameters of a particular application.

The housing 101 includes horizontal partition 106 and vertical partition 107, which divide the housing into a sorbing region 110, a regenerating region 111, and a cooling region 112. The horizontal and vertical partitions, 106, 107, which are joined along the axis of the cylindrical sorbent arrangement 102, similarly divide the sorbent arrangement 102 into a sorbing sector 113, a regenerating sector 114, and a cooling sector 115. The sorbent arrangement 102 passes through the horizontal partition 106 at one location and through the vertical partition 107 at two locations. To minimize leakage of fluids between regions 110, 111 and 112, each partition 106, 107 is fitted with seals 116 along the edges of the partition 106, 107 adjacent the rotating sorbent arrangement 102. While a variety of seals are suitable, a preferred seal 116 includes a blade formed from an elastomeric material, such as silicon rubber removably mounted to the edge of the partition 106, 107. The blade extends circumferentially from the partition 106, 107 along the surface of the sorbent arrangement 102 in the direction of rotation.

The cylindrical sorbent arrangement 102 includes a sorbent assembly 120 joined between a front impervious end cap 121 and a rear impervious end cap (not shown). A sorbent assembly 120 includes a hollow, cylindrical bed 123 of sorbent material disposed between an outer perforated cage 124 and an inner perforated core 125. The cage 124 and core 125, which support the sorbent bed 123, may be fabricated from any sufficiently rigid material chemically compatible with the fluid, including any of several metals or polymers.

The annular front end cap 121 and annular rear end cap (not shown) are joined to the ends of the sorbent assembly 120 and serve to direct fluid generally radially through the sorbent assembly 120 and to support the sorbent assembly 120 both axially and radially. The end caps are mounted to the housing 101 in any suitable manner which both supports the sorbent arrangement 102 for rotation and prevents bypass of the fluid around the sorbent bed 123. For example, the front and rear end caps may engage front and rear mounting brackets (not shown) stationarily mounted to the front and rear walls (not shown) of the housing 101, respectively. A hub portion of each mounting bracket has a diameter corresponding to the inside diameter of each end cap and projects axially a short distance into the center of the end cap to radially support the sorbent arrangement 102.

The sorbent arrangement 102 is also supported by first and second rollers, 132, 133 disposed on opposite sides of the vertical partition 107, frictionally engaging the inside of the sorbent arrangement 102. The rollers 132 project through apertures in the hub portions of the mounting brackets and are supported by the bearings mounted in the front wall 130 and the rear wall (not shown) of the housing 101. At least one of the rollers 132 is driven by a motor 134 through a gland in the rear wall. The driven roller 132 in turn rotates the sorbent arrangement 102. Alternatively, the motor 134 may be disposed within the housing 101 or may be mechanically coupled to the sorbent arrangement 102 by a belt, chain, or gear drive.

In operation, contaminated fluid passes generally into the device 100 through the inlet 103 and into an inlet chamber 140. From the inlet chamber 140, the fluid passes generally radially, i.e., generally perpendicularly to the axis of rotation of filter arrangement 102, through the sorbing sector 113 of the rotating sorbent arrangement 102 and into an outlet chamber 141 in the sorbing region 110 of the housing 101. The hollow configuration of the sorbent arrangement 102 and the radial direction of flow greatly facilitates sealing of the sorbent arrangement against bypass, compared to many conventional axial flow devices. As the fluid passes through the sorbent assembly 120, one or more components are sorbed from the fluid by the sorbent bed 123. From the outlet chamber 141, most of the purified fluid exits the housing 101 through the outlet 104. However, a small portion of the fluid passes through apertures 142 in the vertical partition 107 onto a cooling fluid chamber 143 in the cooling region 112 of the housing 101. Since the sorbent arrangement 102 rotates counterclockwise, as the sorbent bed 123 rotates into the cooling region 112 of the housing 101 from the regenerating region 111, where it was heated during regeneration, the bed 123 is hot but largely free of sorbed components. In accordance with another aspect of the invention, the relatively cool fluid in the cool fluid chamber 143 passes generally radially through the cooling sector 115 of the sorbent arrangement 102, cooling the sorbent 123 and purging any residual sorbed components from the bed 123. The cool regenerated sorbent bed 123 then rotates into the sorbing region 110 of the housing 101 where it again sorbs components from fluid passing through the sorbing sector 113 of the sorbent arrangement 102.

Meanwhile, fluid passing from the cool fluid chamber 143 through the cooling sector 115 is warmed by the hot sorbent bed 123. As a result, the fluid reclaims a portion of the heat provided for regeneration which thereby reduces energy costs. The fluid thereafter enters a warm fluid chamber 144 in the cooling region 112 of the housing 101. From the warm fluid chamber 144, the fluid passes through apertures 145 in the horizontal partition 106, past a heater 146, and into a hot fluid chamber 150. The heater 146, which heats the fluid to the desired regeneration temperature, may include any suitable heat source, including an electrical resistance or a heat exchanger. Further, it may include a temperature control mechanism, such as a cutoff switch or a thermostat for maintaining the temperature of the fluid in the hot fluid chamber 150 within a desired range.

The heated fluid passes generally radially from the hot fluid chamber 150 through the regenerating sector 114 of the sorbent arrangement 102 into an exhaust chamber 151. As the sorbent bed 123 rotates into the regenerating region 111 of the housing 101 from the sorbing region 110, it is charged with the components sorbed from the fluid. The heated fluid passing through the regenerating sector 114 desorbs these components from the sorbent 123, regenerating and heating the bed 123. The sorbent bed 123 then rotates into the cooling region 112 of the housing 101, where it is cooled while the fluid, now highly concentrated with a desorbed components passes from the exhaust chamber 151 through the exhaust 105.

The rotating adsorbent bed thermal regeneration and cooling apparatus described above is intended to operate at relatively low pressures, i.e., slightly above atmospheric pressure. The device is also designed to continuously remove both toxic and odorous contaminants in an air stream as well as water vapor and carbon dioxide.

As the regenerable sorbent suitable for use in the present invention, any material which can be easily regenerated, preferably without the necessity of adding additional substances to effect regeneration, and which adsorbs at least one product converted from at least one contaminant found in the contaminant fluid introduced to the purification system may be used in the invention. Preferably, the regenerable sorbent is capable of sorbingly removing other contaminants from the contaminated fluid including those which have not undergone chemical reaction or conversion by the chemical bed. Most preferably, the sorbent is capable of removing all contaminants. The sorbent, preferably should not cause the decomposition of components of the contaminated fluid to more toxic or corrosive materials unless it is capable of removing same. As suitable regenerable sorbents for use in the invention, various materials may be employed, examples of which include, but are not limited to, activated carbon, alumina, molecular sieves, a sodium silicate such as silicalite or a mixture of sorbents. The particular choice of sorbent depends upon the contaminants being removed and what type of fluid is being purified. In most instances, particularly when contaminated air from a confined area is being treated, molecular sieves, particularly 13X molecular sieve or silicalite is preferred. When air is being purified, the choice of adsorbent depends in part on whether it is necessary to remove water vapor from the contaminated air. When a refrigerant air conditioning unit is employed in the confined space, the heat exchanger of the air conditioning unit is often designed to meet the requirement for humidity control and in such instances, when the fluid purification system is not employed to remove water vapor, a hydrophobic adsorbent is preferred. Use of such an adsorbent allows a greater portion of the adsorbent bed to be used for removal of other gaseous contaminants. It also results in a reduction in the size of the cooling device or condenser employed and a reduction in the waste heat load since water vapor condensation in the cooler is reduced or eliminated. Preferred as the hydrophobic adsorbent is silicalite, a sodium silicate. This hydrophobic adsorbent has the ability to adsorb the above discussed contaminant vapors while permitting most of the water vapor to pass through the adsorbent bed. Preferred as the silicalite is UOP Hi sieve 3000, preferably in 1.5875 mm (1/16th inch) pellet form. The 13X molecular sieve is preferred when water vapor is not one of the contaminants being removed while 13X may be used even when water is being removed. The invention may also include sorbents which are immobilized within a polymeric matrix either flexible or rigid. Example of such immobilized sorbent beds are disclosed in U.S. Patent No. 4,650,575 and 4,687_{,}573, specifically incorporated herein by reference.

In some of the embodiments of the present invention, a pressure-swing adsorber is used either as the sorption device (as a pair of pressure-swing adsorbers) or in fluid communication with a rotating adsorbent bed thermal regeneration and cooling device. Various pressure-swing adsorption devices are available commercially which are suitable for use in the present invention. Typical of such pressure-swing adsorption devices is an apparatus described in United States Patent No. 4,983,190, specifically incorporated herein by reference.

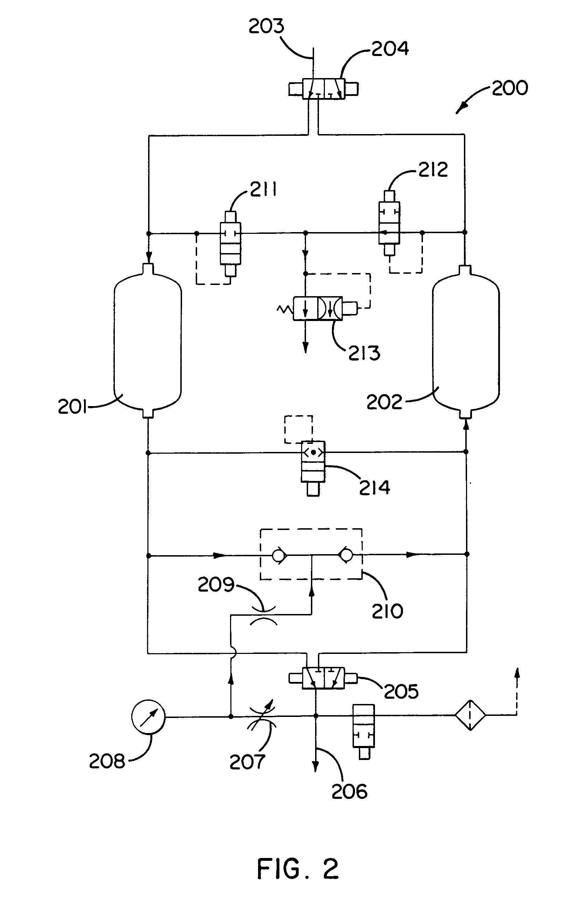

Figure 2 schematically illustrates a pressure-swing adsorption device, such as that described in United States Patent No. 4,983,190. The device is generally designated by reference numeral 200 and is provided with separate left and right adsorption beds or chambers 201 and 202 so that when one chamber is undergoing adsorption the other chamber may be regenerated. Pressurized gas including vapor is received by an inlet pipe 203 provided with an inlet valve assembly 204 to alternately direct the pressurized gas to the left or right chamber where the vapor is adsorbed. In a similar manner, an output valve 205 directs the purified gas to an outlet pipe 206.

To regenerate the adsorbent in one chamber while the other chamber is purifying a contaminated gas, a portion of the purified gas is expanded to approximately atmospheric pressure through a bleeder valve 207 while the gas flow is indicated by a pressure gauge 208 and an orifice 209. This purge flow is directed by a check valve 210 to the chamber selected for regeneration by opening the appropriate one of two exhaust valves 211 or 212. When the exhaust valve is initially opened its respective chamber is pressurized. A dump flow restricter 213 limits the purge exhaust flow to a relatively small rate so that the adsorbent, in the form of beads or pellets, is not "fluidized" due to the opening of the exhaust valve. Fluidizing the adsorbent is undesirable since adsorbent fines are generated which may cause clogging of downstream filters, and in extreme cases, the adsorbent beads may be crushed or fragmented. Another method of minimizing or preventing fluidizing of the adsorbent involves bonding the adsorbent beads to one another by a polymeric binding agent, such as polyethylene, as discussed above.

At the completion of regeneration, the respective exhaust valve 211, 212 is closed. Prior to switching the inlet and outlet valves 204 and 205, to bring the regenerated chamber on-line for adsorption, a repressurization valve 214, associated with the inlet valve 204, is opened, permitting the chamber having been dumped and regenerated to be repressurized without substantially interrupting the outlet flow of purified gas. The adsorption and regeneration processes described above are sequentially controlled by a pneumatic and/or electronic control system which operates the valves 204, 205, 214, 211 and 212, and preferably includes a microcomputer or control system of the type discussed below.

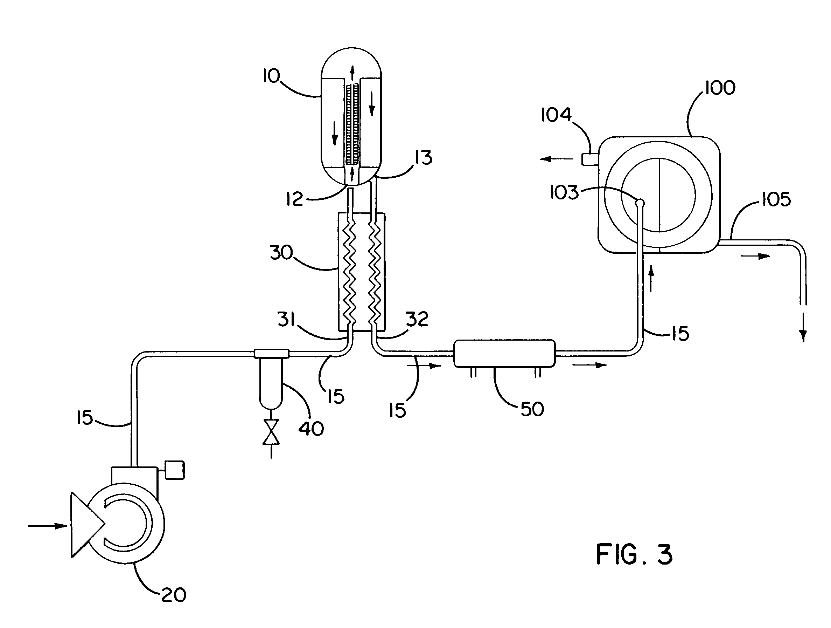

Figure 3 is a schematic representation of a first embodiment of the present invention. A contaminated fluid, typically a gas such as air, is supplied to the catalyst bed 10 through a catalyst bed inlet 12 and emerges from the catalyst bed through an outlet 13. The contaminated air is fed to the fluid purification system through a blower or compressor 20, such as a centrifugal compressor, which is disposed in fluid communication with the catalyst bed 10 by means of a fluid flow path 15, such as tubing or hose. The compressor is used to elevate the air pressure supplied to the catalyst bed 10 by approximately about 20 to about 60 kilopascals, preferably about 35 kilopascals. The pressurized contaminated air from the compressor 20 is then directed through a heat exchanger 30, preferably an air-to-air or countercurrent heat exchanger. Preferably, a filter 40 to remove particulate debris is placed in the fluid flow path of the system intermediate the compressor 20 and the heat exchanger 30.

The heat exchanger raises the temperature of the incoming contaminated gas which reduces the amount of heat necessary to supply to the heated catalyst bed 10, which is generally electrically heated by a resistance heater. Sufficient heat is provided to the catalytic bed 10 to optimize the reactions taking place therein. In situations where components which may be easily oxidized at a lower temperature are present along with refrigerants or other substances of the type which may be decomposed to form toxic and/or corrosive degradation products, a temperature is selected high enough to effect conversion of the more easily oxidized substances but at a sufficiently low temperature to preclude decomposition of the refrigerants or other substances. In the present invention, using the preferred catalyst, a temperature is selected commensurate with the contaminants which are present in the fluid and the products formed or potentially formed, mindful of their detrimental chemical and biological natures. For air, potentially contaminated with refrigerants, this is typically within the range of about 200 to about 315°C, preferably about 220°C. This achieves effective conversion of hydrogen gas into water vapor and carbon monoxide into carbon dioxide. In addition, hydrocarbons from fuel or decomposition of lubricants may also be oxidized to carbon dioxide within this temperature range.

Materials suitable for use as the catalyst in the catalytic bed of the present invention may be selected based on the adsorbents available to remove products formed from a catalytic conversion of a particular contaminant and a consideration of what reactions the contaminant undergoes and what products are produced from such reactions. Thus, in some situations the catalyst may be selected to produce a certain product from the contaminant, which product may be selectively adsorbed by a particular sorbent. In many situations, such as in the treatment of air, particularly air from a confined space such as in an aircraft cabin or a compartment of a sealed water craft, an oxidizing catalyst is preferred. Where refrigerants, such as fluorocarbons and chlorofluorocarbons, are present as contaminants, the catalyst should be selected so as to avoid a reaction which forms more toxic and/or corrosive products. The reduction in the amount of refrigerant vapors which are degraded is obtained by selection of both temperature and catalyst.

As an oxidizing catalyst used in the catalytic beds of the present invention, noble metal catalysts, such as platinum or palladium, may be employed. From a consideration of effectiveness, as well as the cost of the catalyst, hopcalite is preferred as the oxidizing catalyst. At the outlet end of the catalytic oxidizer, a layer of activated alumina may be provided to remove trace quantities of hydrogen chloride and hydrogen fluoride which may result from refrigerant vapor degradation.

After exiting from the catalyst bed 10 through the catalyst outlet 13, the contaminated gas reenters the heat exchanger 30. Whereas heat is supplied to the contaminated gas as it passes through the heat exchanger 30 from the compressor 20 and into the inlet 12 of the heated catalyst bed 10 in order to elevate the temperature of the contaminated gas, the gas entering the heat exchanger 30 upon passing from the catalyst bed 10 gives up thermal energy to the heat exchanger. After passing from the heat exchanger 30 through outlet 32, the contaminated gas is preferably further cooled by a cooling apparatus 50, such as an air or water cooled condenser.

The contaminated air, after passing from the outlet of the cooling device 50, at a temperature at or below room temperature (about 10 to about 25°C), passes through the thermal regeneration and cooling sorption device, preferably of a rotating adsorbent bed arrangement, to effectively remove both oxidized contaminants and other non-oxidized contaminants, such as refrigerant vapors. Purified fluid emerges from the rotating bed adsorbent thermal regeneration and cooling device through purified fluid outlet 104 while the contaminant containing fluid passes from the device through the contaminant-enriched fluid outlet or exhaust 105.

The purified air is directed back into the atmosphere of the confined space. About 5 to about 20% of the throughput air, typically about 10% of the throughput air is withdrawn from the purified air stream and diverted through the regeneration section of the adsorber to desorb and remove the contaminants from the adsorption bed. The exhaust, containing the contaminants, is directed out of the system.

A system such as that exemplified in Figure 3 and described above, operates the catalytic bed at a relatively low temperature, such that refrigerant vapors are maintained at a temperature below that at which they exhibit any significant reaction. This prevents the generation of toxic and bed poisoning compounds. Furthermore, the system of this embodiment can be installed in a very small volume, typically a space having dimensions at or below 1700 mm high x 990 mm wide x 990 mm deep.

In some situations it may be desirable to limit the quantity of purge exhaust, that is, the amount of contaminant-enriched fluid, which is removed from the confined area, since some of the "usable" fluid is also lost with the contaminants. Several embodiments of the present invention may be employed to minimize the lost fluid. In each instance, a greater concentration of the contaminants in a portion of the fluid is achieved prior to removal of the contaminant-enriched portion of the fluid from the environment of the confined space. In these alternate embodiments a pressure swing adsorber and/or a purge loop containing a purge gas cooler, a liquid aerosol separator and a compressor to reintroduce the purge gas back into the CRU are employed.

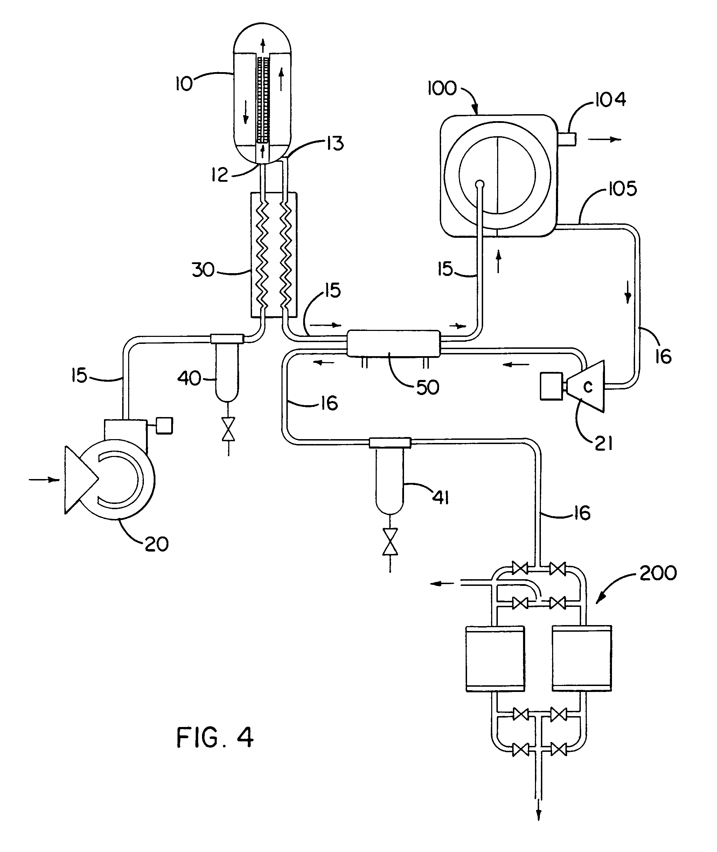

One of these embodiments is illustrated in Figure 4 in addition to the elements illustrated in Figure 3 and described above. Identified by like reference numerals, the embodiment illustrated in Figure 4 employs a pressure swing adsorber, preferably a two bed pressure swing adsorber 200. In addition, the system is preferably provided with a compressor 21 disposed in fluid communication with the contaminant enriched fluid outlet 105 from the rotating adsorbent bed thermal regeneration and cooling device 100 by means of fluid flow path 16. In fluid communication with the outlet side of the compressor 21 is a pressure swing adsorption unit 200, preferably of a two bed design.

Intermediate the blower or compressor 21 and the pressure swing adsorber in the flow path 16 is preferably located a condenser, such as a water cooled after-cooler and/or a water separator. This may take the form of separate units or, as illustrated in Figure 4, may employ the same cooling apparatus 50 used to cool the fluid passing from the outlet side of the heat exchanger 30 after having been treated in the catalyst bed 10. Thus, the cooling apparatus 50 is able to cool and condense some of the volatile components of the contaminant-containing fluid in flow path 15 and the contaminant-enriched fluid in flow path 16. A filter 41, such as a mist-separator, may also be included intermediate the compressor 21 and the pressure swing adsorber 200 in the fluid flow path 16. Preferably, when used with a cooling device such as 50, the filter is placed intermediate the cooling device and the pressure swing adsorber.

In operation, the contaminant-enriched fluid which passes from the rotating adsorbent bed thermal regeneration and cooling device 100 through the contaminant-enriched fluid outlet 105 and passes to the compressor through fluid flow path 16. The blower or compressor compresses the exhaust to about 600 to about 1000 kilopascals (absolute), preferably to about 800 kilopascals. The exhaust then preferably passes through a combined water cooled after-cooler and water separator 50 and through the filter 41, preferably a coalescing filter into the pressure swing adsorber. Pure air is discharged from the pure air outlet 206 at a rate of about 50 to about 80 m³/hour, preferably about 65 m³/hour. This purified air may be combined with the air emanating from the purified fluid outlet 104 from the rotating adsorbent bed thermal regeneration and cooling device 100. Alternatively, the purified air at a pressure of about 700 kilopascals, may be used in a pneumatic control system, where provided.

This embodiment allows a significant reduction in air loss to be achieved. Typically, the purge exhaust rate can be reduced from about 20 to about 30%, typically about 25% of the rate that is normally produced when a supplemental pressure swing adsorber is not employed, i.e., an embodiment of the type illustrated in Figure 3. In addition, the power required to operate the primary compressor 20 in this embodiment can be reduced by approximately 50% by inclusion of a turbo-compressor air cycle machine.

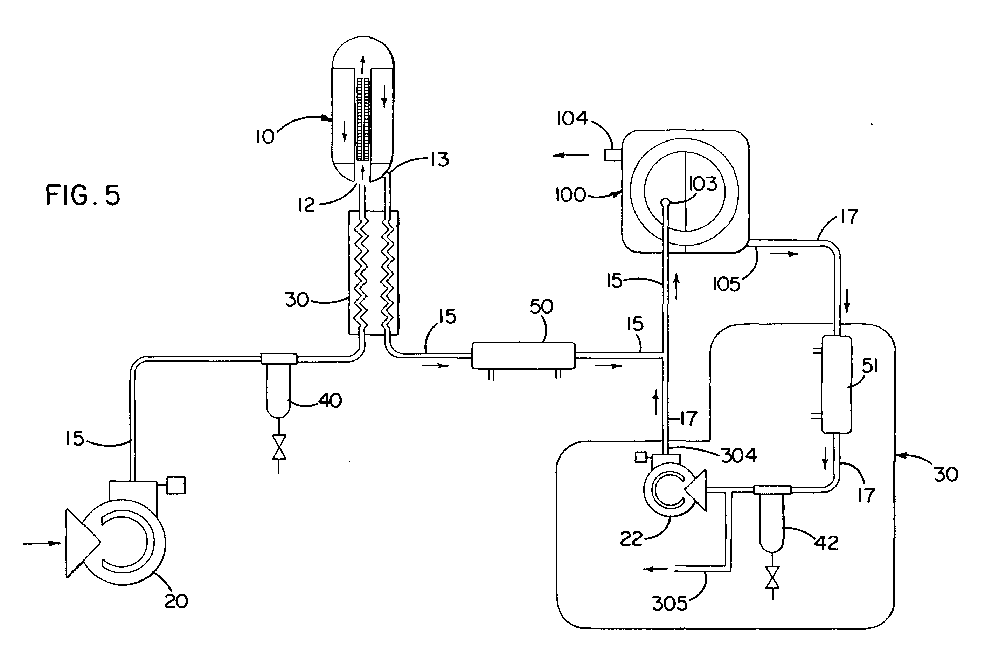

Another embodiment of the invention which significantly reduces the quantity of purge gas exhausted from a regenerable adsorbent system is illustrated in Figure 5. Like reference numerals are used to represent like elements illustrated in Figures 3 and 4 and described above. The embodiment illustrated in Figure 5 includes a purge loop 300 in fluid communication with the contaminant-enriched fluid outlet 105 and the contaminated fluid inlet 103 of a rotating adsorbent bed thermal regeneration and cooling device 100. Thus, a second compressor 22, such as a booster compressor is placed in a fluid flow path 17 placed between the contaminant-enriched fluid outlet 105 and the contaminated fluid inlet 103 of a rotating adsorbent bed thermal regeneration and cooling device 100, thereby recirculating the exhaust back to the adsorbent device 100. Preferably, the recirculation fluid flow path 17 also includes a cooling device, such as an air cooler 51 and a filter 42, which serves as a mist separator to remove liquid condensate from the air stream which is produced in the air cooler. Partially purified air in which a significant portion of the contaminants, including refrigerants when present, may be removed through the purge loop outlet 305 and discharged to the environment while a larger portion of the fluid still containing a small amount of contaminants which have not been removed by condensation are supplied to the compressor 22, whose outlet 304 is in fluid communication with flow path 17 such that it is combined with contaminated fluid entering the rotating adsorbent bed thermal regeneration and cooling device through fluid path 15. The portion which is removed from the flow path 17 through outlet 305, by means of a splitter or valve (not shown) and discharged, typically amounts to no more than several percent.

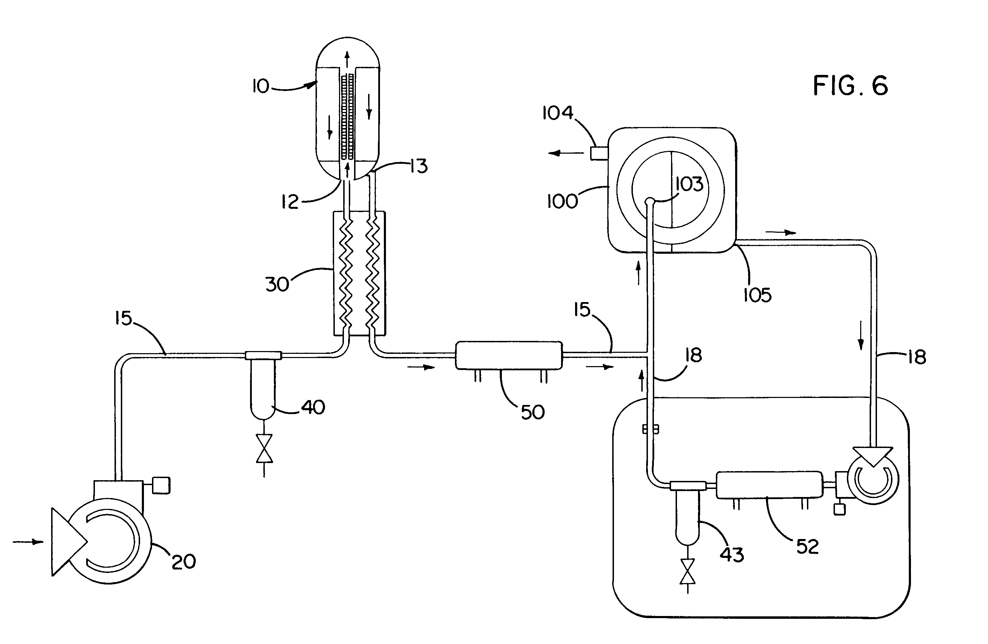

A variation of the purge loop employed in the embodiment illustrated in Figure 5 is shown in Figure 6. Here also, identical reference numerals are used to represent like elements found in the embodiments represented in Figures 3, 4 and 5. In the embodiment illustrated in Figure 6, substantially all of the contaminants present are condensed and substantially none are discharged to the atmosphere. In this embodiment, the concentrated purge stream flowing from the contaminant enriched fluid outlet 105 of sorbent device 100 is transferred to the purge loop through fluid flow path 18, which rejoins the fluid flow path 15 downstream from where contaminated liquid passes through the cooling device 50, and the combined flow paths 15 and 18 are introduced to the contaminated fluid inlet 103 of the rotating adsorbent device 100. In this embodiment, the concentrated purge stream from the contaminant-enriched fluid outlet 105 is pressurized to a high pressure with a high pressure compressor 23. A cooling device or condenser 52 is placed at the outlet and in fluid communication with the compressor 23 to condense contaminant vapors, including refrigerant vapors. A filter or mist separator 43 may then be used to trap and remove such condensed vapors from the system. Thereafter, as indicated above, the fluid flows through the remaining portion of the purge loop 18 to join contaminated fluid flow path entering the rotating adsorbent bed thermal regeneration and cooling device 100 through inlet 103. Thus, unlike the embodiment depicted in Figure 5, the embodiment of Figure 6 combines the use of a high pressure compressor 23 to produce high pressure and a condenser 52 to liquify the contaminants.

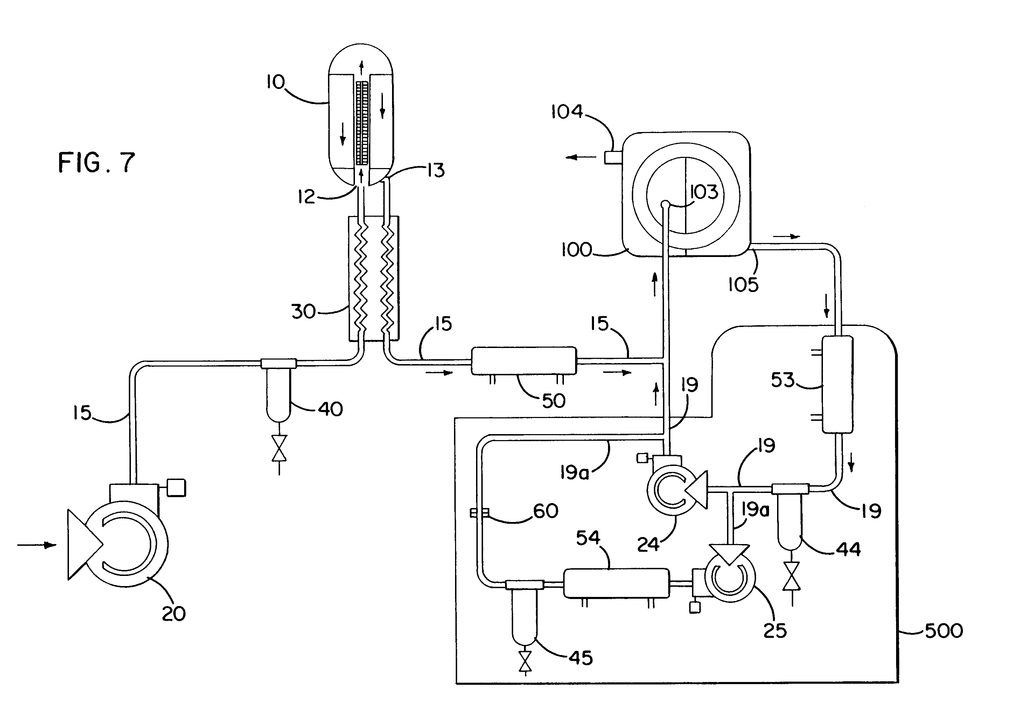

Still another embodiment employing a purge loop is illustrated in Figure 7. Again, the same reference numerals are used to refer to the same elements depicted in Figures 3 to 6. This particular embodiment is preferred at lower flow rates and employs a slip stream. In this embodiment, the contaminant enriched fluid exhausted from the rotating adsorbent bed thermal regeneration and cooling device 100 passes to the purge loop 500 through fluid flow path 19 and is initially cooled by the cooling device 53, such as an air cooler. This results in condensation of water and less volatile contaminants. The contaminant enriched fluid then flows to the filter or separator 44 which, like filters or separators placed downstream of a cooling device in other embodiments of the invention, serves as a mist separator to remove condensed liquid, which tends to be water when air is being purified. After the condensed liquid is removed from the contaminant-enriched fluid, a major portion of the latter is directed through fluid flow path 19 to a booster compressor 24 and a smaller portion is diverted by means of a splitting device or valve to a high pressure compressor 25. The booster compressor 24 of the purge loop 500 directs the contaminated fluid under pressure to the fluid flow path 15 which is in fluid communication with the contaminated fluid inlet 103 of the thermal regeneration and cooling device 100. The other fluid flow path 19a, through which a smaller portion of the contaminated fluid stream flows, directs contaminated fluid, after it has passed through separator 44 to remove moisture, to the high pressure compressor 25 which increases the pressure significantly and directs the fluid through the cooling device 54, such as a condenser which condenses any residual moisture and more volatile contaminants, such as refrigerants. The fluid then flows through the filter or separator 45, such as a mist separator, which removes the liquids condensed in the cooling device 54, and continues through the fluid flow path 19a to rejoin the loop 19 before flowing into fluid flow path 15. An orifice 60 is provided in the fluid flow path 19a intermediate the filter 45 and a point where fluid flow path 19a joins the flow path 19 to decompress the fluid to approximately atmospheric pressure. The condensed refrigerant may then be stored, as in the embodiment illustrated in Figure 6, rather than being bled off, as in the embodiment illustrated in Figure 5. The embodiment of Figure 7 permits the use of a more compact CRU than the embodiment of Figure 6, since the high pressure compressor 25 is pressurizing only a small portion of the fluid stream. Accordingly, this compressor may be much smaller than compressor 23 shown in Figure 6.

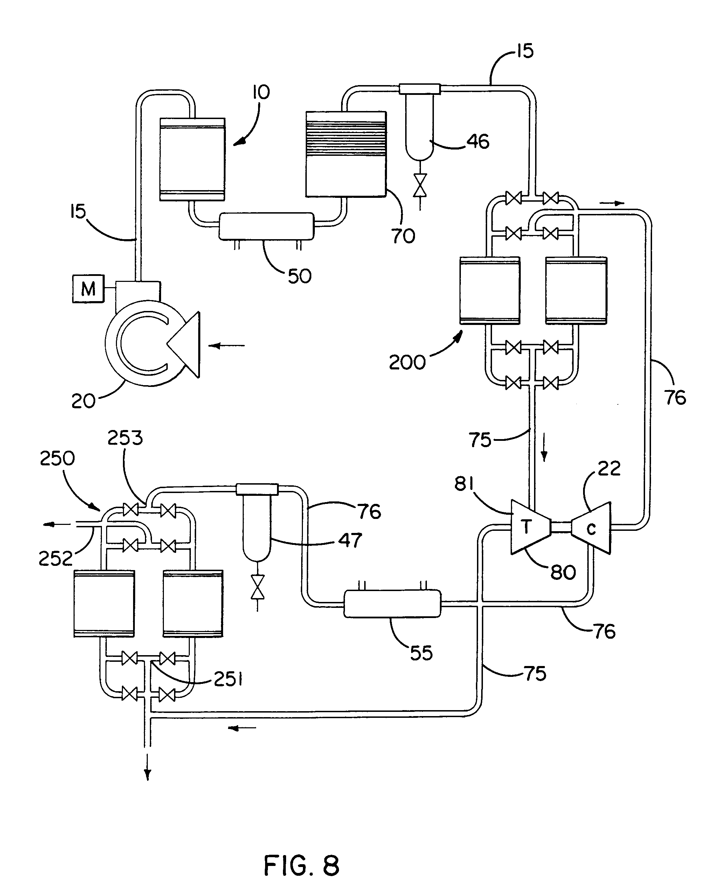

Another embodiment of the invention which is effective in reducing the amount of fluid (such as air) loss from a confined space as a result of separation of contaminants is illustrated in Figure 8. This embodiment differs from the preceding embodiments of the invention in that rather than employing a thermal regeneration cooling device, the system uses a plurality of pressure swing adsorbers, preferably two pressure swing adsorbers. In the embodiment illustrated in Figure 8, a primary pressure swing adsorber 200 is provided intermediate a catalyst bed 10 and a secondary pressure swing adsorber represented generally by reference numeral 250. As in the preceding embodiments, contaminated fluid is provided to the system through a supply pump, blower or compressor 20 and passes to the catalyst bed 10 through fluid flow path 15. Although not indicated in Figure 8, a filter may be provided in the fluid flow path 15 preceding the catalyst bed 10 to remove any particulate present in the fluid stream. Likewise, a heat exchanger may be provided to heat the contaminated fluid entering the catalyst bed 10 and to remove heat from the fluid after it emerges from the catalyst bed. After passing from the catalyst bed 10 (or heat exchanger), the contaminated, and now partially chemically converted, fluid flows through fluid flow path 15 to the primary pressure swing adsorber. Positioned in the fluid flow path 15 intermediate the catalyst bed 10 and the primary pressure swing adsorber 200 is preferably disposed a cooling device, such as an after-cooler 50. In addition, a separator 70, such as a mist separator, is placed intermediate the cooling device 50 and the primary pressure adsorber 200. There is also preferably included a filter 46, intermediate the separator 70 and the primary pressure adsorber 200 which collectively removes aerosols. High pressure purified air flows from the primary pressure swing adsorber 200 through the purified outlet of the primary pressure swing adsorber to the purified air fluid flow path 75 to drive a turbocompressor 80 which is provided with a turbine portion 81 and a compressor portion 82. The turbocompressor is used to compress the purge exhaust or contaminant-enriched fluid passing from the primary pressure swing adsorber through the contaminant enriched fluid flow path 76 to the compressor 82 of the turbocompressor 80. The purge exhaust is compressed to about 600 to about 1000 kilopascals, preferably about 800 kilopascals in the turbo compressor 80. The contaminated purge exhaust flows from the turbocompressor 80 through contaminant-enriched fluid flow path 76 to the secondary pressure swing adsorber 250. The contaminant vapors are further concentrated in the secondary pressure swing adsorber and purified air flows from the secondary pressure swing adsorber 250 through the purified air outlet 251 where it joins the purified fluid which flows from the turbocompressor 80 through the purified air fluid flow path 75. The much enriched contaminant-enriched fluid flows from the secondary pressure swing adsorber through contaminant-enriched fluid outlet 252. Preferably, located in the contaminant-enriched fluid flow path 76, intermediate the compressor 82, of the turbocompressor 80, and the inlet 253 of the secondary pressure swing adsorber 250 is a cooling device 55, such as an after-cooler. Also located in the same leg of the contaminant-enriched fluid flow path 76 intermediate the secondary pressure swing adsorber inlet 253 and the compressor 82 (preferably between the inlet 253 and the cooling device 55), is a separator or filter 47, preferably of the water separator/coalescing filter type, to remove condensed material.

The purified effluent flowing from the secondary pressure swing adsorber 250, is combined with purified material flowing from the turbine 81 which has been cooled by adiabatic expansion resulting in significant cooling of the purified fluid. Typically when applied to air, the fluid may be cooled to a temperature of about 0 to 10°C. This permits not only removal of contaminants in the atmosphere of a confined space but also contributes significantly to the cooling of the environment.

The contaminant removal unit of the present invention preferably also includes a control system for monitoring and automatically controlling contaminant removal unit functions. The exemplary control system preferably controls the operation or one or more functions such as initiating operation, monitoring operation, and terminating operation of the contaminant removal unit automatically, i.e., without human intervention, in accordance with a set of predetermined instructions. However, manual override of control system operation, for example, to shut off the contaminant removal unit, may be accomplished by manipulating a switch on a control panel of the control system, or from a remote site *via* an interrupt signal supplied, for example, by a microprocessor. The contaminant removal unit preferably may be restarted immediately unless certain safety interlocks prohibit restart, as is explained subsequently. Upon termination of the operation of the contaminant removal unit, preferably the design of the control system permits the retention of all monitored data for diagnostic and maintenance purposes.

The control system of the preferred embodiment preferably initiates, controls, monitors, and terminates contaminant removal unit operation by a predetermined control sequence. The control sequence may be implemented *via* a central control unit and a plurality of subsystems which comprise the control system. The central control unit may be a microprocessor and associated memory preprogrammed with the control sequence, or preferably a hardwired relay network preset to implement the control sequence. In an exemplary embodiment, the control system comprises the central control unit, three motor controllers, two heater controllers, a fire extinguisher controller, a power converter, and the control panel including various monitoring devices.

The first motor controller is used to control and monitor the operation of the compressor which pressurizes the incoming air. The first motor controller may comprise a soft start motor starter, a motor, and a sensor. The soft start motor starter may be used to limit the amount of current drawn by the motor upon motor spool-up, thereby preventing possible damage to the main power supply. The motor may be any type electric motor developing enough torque to rotate the rotor of the compressor at a predetermined velocity. Preferably, the motor is a sixty-cycle, three-phase AC induction motor operable to produce approximately 29.822 joules (twenty-two ft-lb) of torque at 11.185 kilowatts (fifteen hp). Various gearing arrangements between the motor and the compressor rotor may be required. The sensor may be a tachometer or any other suitable device for measuring the angular velocity of compressor rotor rotation. Based upon sensor measurements, i.e., feedback signals from the sensor, the central control unit may be used to increase, decrease and/or maintain the angular velocity of compressor rotor rotation *via* commands to the first motor controller.

The second motor controller of the preferred embodiment is used to control and monitor the operation of a booster compressor, when employed, which pressurizes and recirculates the purge air in the rotating drum adsorber. The second motor controller may comprise a soft start motor starter, a motor, and a sensor. The soft start motor starter may be employed to limit the amount of current drawn by the motor upon motor spool-up, thereby preventing possible damage to the main power supply. The motor may be any type electric motor developing, enough torque to rotate the rotor of the booster compressor at a predetermined velocity. Preferably, the motor is a sixty-cycle, three-phase AC induction motor operable to produce approximately 6.78 joules (five ft-lb) of torque at 2.238 kilowatts (three hp). Various gearing arrangements between the motor and the booster compressor rotor may be required. The sensor may be a tachometer or any other suitable device for measuring the angular velocity of booster compressor rotor rotation. Based upon sensor measurements, the central control unit may be used to increase, decrease, and/or maintain the angular velocity of booster compressor rotor rotation *via* commands to the second motor controller.

When employed in a preferred embodiment, the third motor controller is used to control and monitor the operation of the rotating drum temperature swing adsorber. The third motor controller preferably includes a motor, a motor starter, and a sensor. The motor may be any type electric motor developing enough torque to rotate the drum of the adsorber at a predetermined velocity. Preferably, the motor is a twenty-eight volt DC motor operable to produce approximately 0.2712 joules (0.2 ft-lb) of torque at 74.6 watts (one-tenth hp). Various gearing arrangements between the motor and the drum may be required. The main power supply produces sixty-cycle, three-phase, four hundred forty volt AC power. Accordingly, the power converter, which may comprise a rectifier circuit and transformer, converts the power from the main power supply to a lower voltage DC signal for use by the motor. The motor starter for this motor need not be a soft start motor starter since there is little danger of drawing too much current from the main power supply. Preferably, the starter is a reduction gear motor starter. The sensor may be a tachometer or any other suitable device for measuring the angular velocity of drum rotation. Based upon sensor measurements, the central control unit may be used to increase, decrease, and/or maintain the angular velocity of drum rotation *via* commands to the third motor controller.

The first heater controller of the preferred embodiment is used to control and monitor the operation of a heater employed to heat the adsorbent bed of the rotating drum adsorber. The first heater controller preferably includes an electrical heater contactor, the heater, and a sensor. The electrical heater contactor is an interface between the main power supply and the heater, which receives control commands from the central control unit. The electrical heater contactor may safely operate off the power from the main power supply. The electrical heater contactor receives commands from the central control unit and feed back signals from the sensor, and outputs corresponding control signals to the heater. The heater may be any type of heater which is operable to heat the adsorption bed to a predetermined temperature. Preferably, the heater is an electrical resistance heater providing a two kW power output. The sensor is used to monitor the temperature of the adsorption bed. The sensor preferably includes thermocouples connected to various locations inside the adsorption bed, thereby providing accurate temperature readings. Preferably, the sensor is a resistance temperature detector mounted to the adsorption bed, the output of which is preferably connected to a central control unit to provide temperature feedback signals. Accordingly, the central control unit may be used to increase, decrease, and/or maintain the temperature in the adsorption beds based upon these feedback signals. In the preferred embodiment, the first heater controller maintains the temperature in the adsorption bed within a suitable temperature range for the materials used and substances being purified. For air purification, particularly with refrigerants present, this is typically between one hundred seventy-five and two hundred °C. If the temperature in the adsorption bed exceeds the upper temperature limit, the central control unit terminates operation of the contaminant removal unit until the temperature drops below this value. This temperature sensitive shut-down is a safety interlock preventing automatic restart of the contaminant removal unit.

The second heater controller, when used, is provided to control and monitor the operation of a heater used to heat the catalytic bed of the catalytic converter. The second heater controller may comprise an electrical heater contactor, the heater, and a sensor. The electrical heater contactor is an interface between the main power supply and the heater and which receives control commands from the central control unit. The electrical heater contactor may safely operate off the power from the main power supply. The electrical heater contactor receives commands from the central control unit and feedback signals from the sensor, and outputs corresponding control signals to the heater. The heater may be any type of heater which is operable to heat the catalytic beds to a predetermined temperature. Preferably, the heater is an electrical resistance heater providing a thirteen kW power output. The sensor is employed to monitor the temperature of the catalytic beds. The sensor preferably includes thermocouples connected to various locations inside the adsorption beds, thereby providing accurate temperature readings. Preferably, the sensor is a resistance temperature detector, the output of which may be connected to central control unit to provide temperature feedback signals. Accordingly, the central control unit may be used to increase, decrease, and/or maintain the temperature in the catalytic bed based upon these feedback signals. In the preferred embodiment, the second heater controller, like the first heater controller, maintains the temperature in the catalytic bed at a temperature commensurate with the materials being purified and the products formed or potentially formed. For air purification, when refrigerants are likely to be present, typically the temperature is between about two hundred twenty and three hundred °C. If the temperature in the catalytic bed exceeds the upper temperature limit, the central control unit terminates operation of the contaminant removal unit until the temperature drops below this value. This temperature sensitive shut-down is a second safety interlock preventing automatic restart of the contaminant removal unit. Additionally, in a preferred embodiment, if the temperature in the catalytic bed exceeds five hundred °C, the central control unit outputs a command to the fire extinguisher controller in addition to terminating operation of the contaminant removal unit. The fire extinguisher controller actuates a solenoid valve which releases water into the catalytic converter to extinguish any fires therein.

The control sequence which the control system implements essentially comprises an initiation sequence, a termination sequence and a monitoring sequence. The monitoring sequence has no set duration because the control system continuously monitors contaminant removal unit parameters in the time period between initiation and termination. In a preferred embodiment, the initiation sequence may take approximately between twenty-five and one hundred fifty seconds, and preferably between fifty and seventy-five seconds. The initiation sequence may be broken down as follows. The compressor may be brought up to a operational speed by the first motor controller within thirty seconds, and preferably within fifteen seconds from initiation. The booster compressor, when employed, may be brought up to full operational speed by the second motor controller within sixty seconds, preferably within thirty seconds from initiation. The drum rotor may be brought up to full operational speed by the third motor controller within ninety seconds, and preferably within forty-five seconds of initiation. The temperature of the catalytic bed may be elevated to operational temperatures by the second heater controller within one hundred twenty seconds, and preferably within sixty seconds of initiation. The temperature of the adsorption bed may be elevated to operational temperatures by the first heater controller within one hundred forty seconds, and preferably within seventy-five seconds of initiation. In the exemplary embodiment, the termination sequence may take approximately between eighty and four hundred seconds, and preferably between one hundred sixty and two hundred eighty seconds. The termination sequence may be broken down as follows. The two heaters may be shut-off within five seconds, and preferably within two seconds. The three motors may be shut-off within three hundred seconds, and preferably within one hundred eighty seconds.

## Claims

1. A fluid purification system characterized by:
a catalyst bed (10) for chemically converting at least one contaminant present in a fluid to a substance selectively removable by a sorbent, and
a sorption device (100, 200) in fluid communication with said catalyst bed, said sorption device including regenerable sorbent capable of removing said substance.

2. A fluid purification system according to claim 1 wherein said catalyst bed includes an oxidizing catalyst.

3. A fluid purification system according to claim 1 wherein said catalyst includes hopcalite.

4. A fluid purification system according to claim 1, 2, or 3 wherein said sorption device comprises a rotating adsorbent bed thermal regeneration and cooling device (100).

5. A fluid purification system according to claim 4 wherein said thermal regeneration and cooling device is provided with a contaminated fluid inlet (103), a purified fluid outlet (104) and a contaminant-enriched fluid outlet (105) and said fluid purification system futher includes a pressure swing adsorber (200) in fluid communication with said contaminant enriched outlet (105).

6. A fluid purification system according to claim 1, 2, 3, 4, or 5 wherein said regenerable sorbent comprises 13X molecular sieve.

7. A fluid purification system according to claim 1, 2, 3, 4, or 5 wherein said regenerable sorbent comprises silicalite.

8. A fluid purification system according to claim 1, 2, 3, 4, 5, 6, or 7 wherein said sorption device is provided with a contaminated fluid inlet (103), a purified fluid outlet (104) and a contaminant-enriched fluid outlet (105) and said fluid purification system further includes a contaminant-enriched fluid recirculation loop (300, 400, 500) in fluid communication between said contaminant-enriched fluid outlet (104) and said contaminant fluid inlet (103).

9. A fluid purification system according to claim 8 wherein said contaminant-enriched fluid recirculation loop includes at least one condenser (51, 52, 53), at least one aerosol separator (42, 43, 44) and at least one compressor (22, 23, 24).

10. A fluid purification system according to claim 1, 2, 3, 4, 5, 6, 7, 8, or 9 wherein said system further includes a blower (20) in fluid communication with an inlet (15) to said catalyst bed (10), a filter (40) disposed intermediate and in fluid communication with said blower (20) and said catalyst bed (10), and a heat exchanger (30) in fluid communication with said catalyst bed (10) and said sorption device (100, 200).

11. A fluid purification system according to claim 1, 2, or 3 wherein said sorption device comprises at least two pressure swing adsorbers (250) operatively connected to one another.

12. A method of purifying a fluid stream characterized by:
introducing a fluid stream to a catalyst bed (10);
chemically converting at least one contaminant present in the fluid to a substance which is selectively removable by a sorbent; and
introducing the fluid stream to a sorption device (100, 200) containing a regenerable sorbent, said sorbent device (100, 200) disposed in fluid communication with the catalyst bed (10).

13. The method of claim 12 wherein the fluid stream comprises an air stream.

14. The method of claim 12 or 13 wherein the sorption device comprises an adsorbent bed thermal regeneration and cooling device (100).

15. The method of claim 12 or 13 wherein the sorption device comprises at least two pressure swing adsorbers (200,250) operatively connected to one another.
